# EUROPEAN PATENT SPECIFICATION

(11) **EP 1 438 830 B1**
(45) Date of publication and mention of the grant of the patent: **21.03.2007**
(21) Application number: 02800331.7
(22) Date of filing: 13.09.2002
(51) Int. Cl.: H04L 29/12

(54) **METHOD AND SYSTEM FOR CONTACTING A DEVICE ON A PRIVATE NETWORK USING A SPECIALIZED DOMAIN NAME SERVER**
VERFAHREN UND SYSTEM ZUM KONTAKTIEREN EINER EINRICHTUNG IN EINEM PRIVATEN NETZWERK DURCH VERWENDUNG EINES SPEZIALISIERTEN DOMAIN-NAMENSERVER
PROCEDE ET SYSTEME DE MISE EN CONTACT D'UN DISPOSITIF SUR UN RESEAU PRIVE AU MOYEN D'UN SERVEUR DE NOMS DE DOMAINES SPECIALISE

(30) Priority: 28.09.2001 US 967635
(43) Date of publication of application: 21.07.2004
(73) Proprietor: QUALCOMM INCORPORATED, San Diego, California 92121 (US)
(72) Inventor: JAIN, Nikhil, San Diego, CA 92130 (US)
(74) Representative: Heselberger, Johannes
(86) International application number: PCT/US2002/029053
(87) International publication number: WO 2003/030482

(56) References cited:
- WO-A-00/39980
- SRISURESH P ET AL: "DNS extensions to Network Address Translators (DNS_ALG)" INTERNET DRAFT, July 1998 (1998-07), XP002199933 Retrieved from the Internet: <URL:ftp://ftp.inet.no/pub/ietf/internet-d rafts/draft-ietf-nat-dns-alg-00.txt> [retrieved on 2002-05-24]

## Description

### BACKGROUND OF THE INVENTION

### I. Field of the Invention

The present invention relates generally to communications between publicly and privately networked computers or data devices, and more particularly to a system and method for initiating communications with communication devices in a private network from sources outside of the private network.

### II. Related Art

If one were to look around most companies, universities, and organizations today, you would find that each is filled with computers used to exchange electronic mail and browse the World Wide Web via the Internet. The Internet Protocol (IP) is the method most relied upon to allow computers to communicate with one another. IP addressing uses a 32-bit addressing scheme to identify each computer connected to the Internet (for example, 126.7.2.5). Consequently, there are only 2³² unique IP addresses available for use worldwide. Because of the limited availability of IP addresses, each company, university, and organization desiring Internet access is usually provided with only one of the 2³² available Internet addresses.

However, companies, universities, and organizations alike maintain hundreds if not thousands of computers or other network connected devices. In order to utilize the IP addressing scheme and provide public network access to each workstation or connected device, local area (that is, private) networks are implemented. These private networks can be viewed as isolated device communities. Each computer (device) within an isolated community is assigned one of the 2³² IP addresses. Any number of computers may have the same IP address provided they are in separate isolated communities (that is, private networks). However, no two connected devices within the same private network can have the same IP address. For this reason, the IP addresses assigned to computers connected to private networks cannot be used outside of the private network. Therefore, network address translation is needed to facilitate communications between computers located within different networks, particularly when such communications occur over the Internet.

Network address translation is used to map the IP addresses used by computers within local networks to one of the 2³² publicly accessible IP addresses assigned to the company, university, or organization. For example, if a user on a computer within a private network initiates a request to communicate (for example, FTP, Telnet, or other connection involving the exchange of datagrams), it transmits data with an origination IP address of, for example, 129.98.3.5 (that is, its own IP address within the private network). A network address translator would then map the origination IP address to the publicly accessible IP address assigned to the organization (for example, 128.97.6.3). Accordingly, the datagrams would be sent over the network with an origination IP address of 128.97.6.3 rather than 129.98.3.5 (the actual IP address of the computer sending the datagrams). Any responses to the request to communicate would consequently be directed to the IP address 128.97.6.3. The network address translator would then map the 128.97.6.3 address to 129.98.3.5 and route the datagram to the appropriate computer within the private network. In this way, the actual IP address of the computer within the private network is never disclosed publicly.
When the exchange of information is completed, the mapping is cleared so that the publicly accessible IP address can be made available to another computer or device within the private network seeking to communicate externally. However, because the IP addresses of the computers within the private networks are not publicly known and since the mapping is not permanently maintained, this communications process does not work in the opposite direction (that is, when a computer outside the private network wants to initiate communication with a computer within the private network). In the present example, for instance, any request to communicate with a computer within the private network would be sent with a destination IP address of 128.97.6.3 (that is, the publicly accessible IP address). If a request was intended for the computer having IP address 129.98.3.5, there would be no way of routing the request appropriately because no mapping (that is, association of the two IP addresses) has been made.

In WO 00/39980 this problem is solved by using a name and address server in the public network, an interface which assures address translation and a management unit in the private network. In order to address a machine located in a private network by a machine located in the public network, the name and address server in the public network sends a package with the name of the addressed machine to a second address in the public network. The interface broadcasts this package to a management unit in the private network which obtains an address of the addressed machine. The management unit sends a package with the obtained address to the interface, wherein the interface exchanges the obtained address with a further address and transmits this further address to the name and address server.

Therefore what is needed is a method and system for generating a publicly accessible IP address for a local device when the communications request is initiated from a device outside of the private network.

### SUMMARY OF THE INVENTION

The present invention is a method and system for using a specialized domain name server to process requests for remote computers or other connected devices to communicate with local computers or connected devices on a private network. Connected devices could include for example personal computers, workstations, sensors, wireless interfaces or portals, wireless communication devices, output devices such as printers, visual display devices, or other well known devices capable of communicating over a network. The requests are initiated by the remote devices and identify the privately networked device, such as computers, by their domain names. In processing communications requests, the specialized domain name server, first receives over a public network, a request for a remote device to communicate with a local device located within the private network. The request uses a domain name assigned to the local device. Next, the specialized domain name server generates a subsequent request for the local device to communicate with the specialized domain name server. This subsequent request is generated in response to receiving the request for the remote device to communicate with the local device.

The specialized domain name server then transmits the subsequent request to a network address translator (NAT). In response to receiving the subsequent request for the local device to communicate with the specialized domain name server, the NAT generates a public network address and sends it to the specialized domain name server. After receiving the public network address, the specialized domain name server generates a response to the request for the remote device to communicate with the local device. The response includes the public network address for the local device. Finally, the specialized domain name server transmits the generated response to the remote device. The remote device is then able to communicate with the local device using the public network address. The object is solved by a method according to claim 1 by a spezialized domain name server according to claim 3, and by a corresponding system according to claim 6. Further embodiments, features and advantages of the present invention, as well as the structure and operation of various embodiments of the present invention are described in detail below with reference to the accompanying drawings.

### BRIEF DESCRIPTION OF THE DRAWINGS

The present invention is described with reference to the accompanying drawings. In the drawings, like reference numbers generally indicate identical, functionally similar, and/or structurally similar elements. The drawing in which an element first appears is indicated by the left-most digit or digits in the corresponding reference number. The accompanying figures illustrate the present invention and, together with the description, further serve to explain the principles of the invention and to enable a person skilled in the relevant art to make and use the invention.

FIG. 1 illustrates an example illustration of a system for contacting a local device on a private network over a public network using a specialized domain name server according to an embodiment of the present invention.

FIG. 2 is a block diagram illustration of an example specialized domain name server according to an embodiment of the present invention.

FIG. 3 is a flowchart diagram illustrating an exemplary method for using a specialized domain name server to provide a public network address for a local device on a private network to a remote device in accordance with an embodiment of the present invention.

FIG. 4 is a block diagram implementation of the exemplary method illustrated in FIG. 3.

### DETAILED DESCRIPTION OF PREFERRED EMBODIMENTS

The present invention is a method and system for using a specialized domain name server to process requests for remotely located devices to communicate with local devices on a private network. The present invention is described in terms of examples contained herein, such as using computers connected to communicate over networks. This is for convenience only and is not intended to limit the application of the present invention. In fact, after reading the following description, it will be apparent to one skilled in the relevant art(s) how to implement the following invention in alternative embodiments, for example using wireless devices and interfaces to networks.

The following terms are used throughout the remainder of this document.

The term "private network" refers to a proprietary computer network such as a local area network (LAN), or intranet, to which computing devices are connected and assigned network addresses unique to the private network.

The term "public network" refers to the Internet, or other large area or widely accessible network.

The term "local device" refers to a general purpose computer or any other computer networked device located within the private network. For example networked devices could include without limitation personal computers, workstations, modems, transceiver modules, sensor elements or devices, wireless interfaces or portals, wireless communication devices, output devices such as printers, facsimile machines, visual display devices, or other well known devices capable of communicating over a network.

The term "remote device" refers to a general purpose computer or any other computer networked device located outside the private network, such as those discussed above for purposes of illustration.

The term "user datagram protocol" (UDP) refers to a communications method for exchanging datagrams from one computer to another.

The term "Network Address Translator" (NAT) refers to commercially available computer routers used to assign public network addresses to local devices.

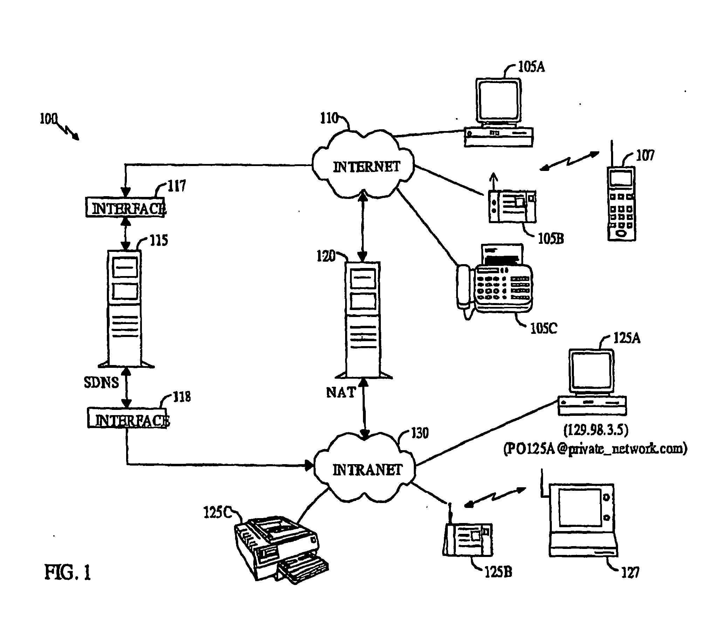

FIG. 1 is a block diagram depicting system 100. System 100 is a typical operational environment in which the various features of the present invention can be implemented. It is an advantage of the invention that it may be implemented in many different ways in many environments and on many different computers or computer systems, or using a variety of networkable devices. System 100 is comprised of remote devices 105A, 105B, and 105C (referred to collectively as 105). The remote devices 105 are connected to a public network (for example, the Internet) 110. System 100 further comprises a specialized domain name server (SDNS) 115, a NAT 120, and a plurality of local devices 125A, 125B, and 125C (referred to collectively as 125). The local devices 125 are connected to a private network (for example, intranet or LAN) 130.

In the disclosed embodiment, remote devices 105 and local devices 125 are shown as general purpose computers 105A and 125A; respectively, wireless communication devices 107, 127 which are in communication with wireless network interfaces 105B, 125B, respectively; and FAX machine 105C and printer 125C.

When wireless communication devices are used with the local or remote networks they are typically communicating with the network using a wireless interface device of some type. One example of a known interface is the use of specialized wireless transceivers for home-based computer networks. Other examples include, but are not limited to, wireless Ethernet connections provided by circuits manufactured in accordance with the Institute of Electrical and Electronics Engineers (IEEE) standards referred to as 802.11, 802.11b, or 802.11a, a well known newer interface standard for wireless communications referred to as "Bluetooth." These types of devices provide portals or connections (nodes) to networks for wireless transfer of signals using devices connected physically to networks that operate as hubs or base stations for the wireless devices. Such apparatus or devices are known in the art.

Alternatively, a variety of wireless telephones, PDAs, or modem type devices might be used to connect with local or remote networks, and may in turn be connected to a variety of computers including portable, notebook, or handheld types. These devices may be connected by communicating with small hubs, specialized repeaters, or base stations in buildings connected to a network; or through one of various known wireless communication systems, cellular phone infrastructure, or wireless services which can provide connections from base stations to the Internet or networked services. Examples of known cellular systems include the cellular Analog Advanced Mobile Phone System (AMPS), and the following digital cellular systems: Code Division Multiple Access (CDMA) spread spectrum systems; Time Division Multiple Access (TDMA) systems; and newer hybrid digital communication systems using both TDMA and CDMA technologies. A CDMA cellular system is described in the Telecommunications Industry Association/Electronic Industries Association (TIA/EIA) Standard IS-95. Combined AMPS & CDMA systems are described in TIA/EIA Standard IS-98. Other communications systems are described in the International Mobile Telecommunications System 2000/Universal Mobile Telecommunications System or IMT-2000/UM standards, covering what are commonly referred to as wideband CDMA (WCDMA), cdma2000 (such as cdma2000 1x-rxtt cdma2000 1x, 3x, or MC standards, for example) or TD-SCDMA. Satellite based communication systems also utilize these or similar known standards.

Local devices 125 are each assigned domain names and IP addresses that are unique to the private network 130 in which they are located. Domain names and IP addresses are used to distinguish one computer on a network from another. In the present example, local device 125A has a domain name of PC125A@private_network.com and an IP address of 129.98.3.5. After reading this description, the configuration of local devices 125 and remote devices 105 would be apparent to one of ordinary skill in the relevant art(s).

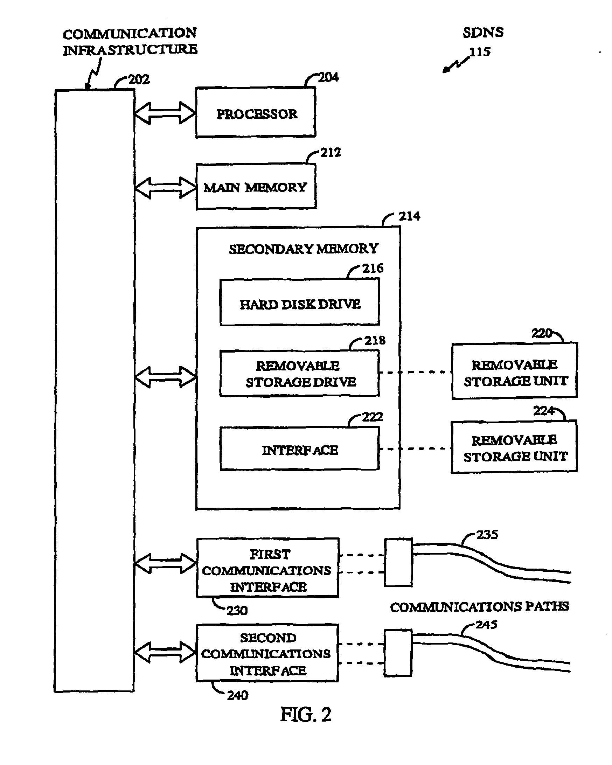

As previously discussed, the IP addresses assigned to local devices 125 cannot be used outside of the private network. Therefore network address translation is needed to facilitate communications between remote devices 105 and local devices 125. NAT 120 can be any standard router configured to perform network address translation. Accordingly, NAT 120 is responsible for mapping the private network IP addresses for local devices 125 to one of the 2³² publicly accessible IP addresses. In the disclosed embodiment, NAT 120 generates (that is, maps) a public network address to one of the local devices 125 in response to receiving a request for the local device 125 to communicate with SDNS 115. SDNS 115 is responsible for providing remote devices 105 with the, NAT generated, public network addresses for local devices 125. A detailed description of SDNS 115 is provided with reference to FIG. 2.

SDNS 115 can be used to implement computer program product embodiments of the present invention. The example embodiment of FIG. 2 is illustrative and not intended to limit the present invention. Here, SDNS 115 represents any single or multi-processor computer. Single-threaded and multi-threaded computers can be used. Unified or distributed memory systems can be used. However, those skilled in the art will readily recognize that other types of control and command devices, dedicated network controllers, routers, or specialized servers, as well as other known elements might be used to implement this function.

SDNS 115 includes one or more processors, such as processor 204. One or more processors 204 can execute software and implement all or part of the features of the present invention described herein. Each processor 204 is connected to a communication infrastructure 202 (for example, a communications bus, cross-bar, or network). In the disclosed embodiment, upon receiving a request for one of the remote devices 105 to communicate with one of the local devices 125, processor 204 is used to generate a subsequent request for one of the local devices 125 to communicate with SDNS 115. Examples for which requests to communicate might be initiated include FTP, Telnet, Voice over IP (VOIP), or many other instances or processes involving the exchange of datagrams. The requests to communicate specify the domain names assigned to each respective local device 125A, 125B, and 125C. Processor 204 is further responsible for generating a response to the request for one of the remote devices 105 to communicate with one of the local devices 125. This generated response includes a public network address for one of the local devices 125. The public network address is generated by NAT 120. After reading this description, it will become apparent to a person skilled in the relevant art(s) how to implement the invention using other computer systems and/or computer architectures, or firmware, software, or other control processors and devices.

SDNS 115 also includes or is connected to a main memory 212, preferably in the form of random access memory (RAM), and can also include secondary memory 214. In the exemplary embodiment, main memory 212 is loaded with a lookup table listing the private network domain name and IP address for each respective local device 125A, 125B, and 125C. Secondary memory 214 can include, for example, a hard disk drive 216 and/or a removable storage drive 218, representing a floppy disk drive, a magnetic tape drive, an optical disk drive, etc., each being devices the use of which is well understood in the art The removable storage drive 218 reads from and/or writes to a removable storage unit 220 in a well-known manner. Removable storage unit 220 represents a floppy disk, magnetic tape, optical disk, etc., which is read by and written to by removable storage drive 218. As will be appreciated, the removable storage unit 220 includes a computer usable storage medium having stored therein computer software and/or data.

In alternative embodiments, secondary memory 214 may include other similar means for allowing computer programs or other instructions to be loaded into SDNS 115. Such means can include, for example, a removable storage unit 224 and an interface 222. Examples can include a program cartridge and cartridge interface (such as that found in video game devices), a removable memory chip (such as an EPROM, or PROM) and associated socket, and other removable storage units 224 and interfaces 222 which allow software and data to be transferred from the removable storage unit 224 to SDNS 115.

SDNS 115 may also include one or more communications interfaces and one or more communications paths. In the disclosed embodiment, SDNS 115 includes two communications interfaces: first communications interface 230 and second communications interface 240. In the disclosed embodiment, SDNS 115 further includes two communications paths: first communications path 235 and second communications path 245.

First communications interface 230 allows software and data to be transferred between SDNS 115 and external devices over the public network 110 by means of first communications path 235. In the disclosed embodiment, first communications interface 230 is used to receive requests for one of the remote devices 105 to communicate with one of the local devices 125. These requests are transmitted over public network 110 using first communications path 235. First communications interface 230 is further used for receiving a public network address generated for one of the local devices 125 by NAT 120. The public network address is received over public network 110 using first communications path 235. Further, first communications interface 230 is also used for transmitting the response generated by processor 204. This response is transmitted to the remote device 105 that initiated the request to communicate with one of the local devices 125. Furthermore, this response is transmitted over first communications path 235. Examples of first communications interface 230 can include a modem, a network interface (such as Ethernet card), a communications port, etc. Software and data transferred over first communications path 235 are in the form of signals which can be electronic, electromagnetic, optical or other signals capable of being received by first communications interface 230.

Second communications interface 240 allows software and data to be transmitted between SDNS 115 and external devices over the private network 130. In the disclosed embodiment, second communications interface 240 is used for transmitting the generated subsequent request for one of the local devices 125 to communicate with SDNS 115. This transmission is sent over the private network 130 via second communications path 245. Examples of second communications interface 240 can include a modem, a network interface (such as Ethernet card), a wireless network interface or transfer link, a communications port, etc. Software and data transferred over second communications path 245 are in the form of signals which can be electronic, electromagnetic, optical or other signals capable of being received by second communications interface 240.

The present invention can be implemented using software running (that is, executing) in an environment similar to that described above with respect to FIG. 2. In this document, the term "computer program product" is used to generally refer to removable storage unit 220, a hard disk installed in hard disk drive 218, or a carrier wave or other signal carrying software over a communication path 235 (wireless link or cable) to communication interface 230. A computer useable medium can include magnetic media, optical media, or other recordable media, or media that transmits a carrier wave. These computer program products are means for providing software to SDNS 115.

Computer programs (also called computer control logic) are stored in main memory 212 and/or secondary memory 214. Computer programs can also be received through communications interface 230. Such computer programs, when executed, enable SDNS 115 to perform the features of the present invention as discussed herein. In particular, the computer programs, when executed, enable the processor 204 to perform the features of the present invention. Accordingly, such computer programs represent controllers of SDNS 115.

In an embodiment where the invention is implemented using software, the software may be stored in a computer program product and loaded into SDNS 115 using removable storage drive 218, hard drive 216, or communications interface 230. Alternatively, the computer program product may be downloaded to SDNS 115 over communications path 235, which can include a wireless portion and/or a wireless or optical conductor portion. The control logic (software), when executed by the one or more processors 204, causes the processor(s) 204 to perform the functions of the invention as described herein.

In another embodiment, the invention is implemented primarily in firmware and/or hardware using, for example, hardware components such as application specific integrated circuits (ASICs). Implementation of a hardware state machine so as to perform the functions described herein will be apparent to a person skilled in the relevant art.

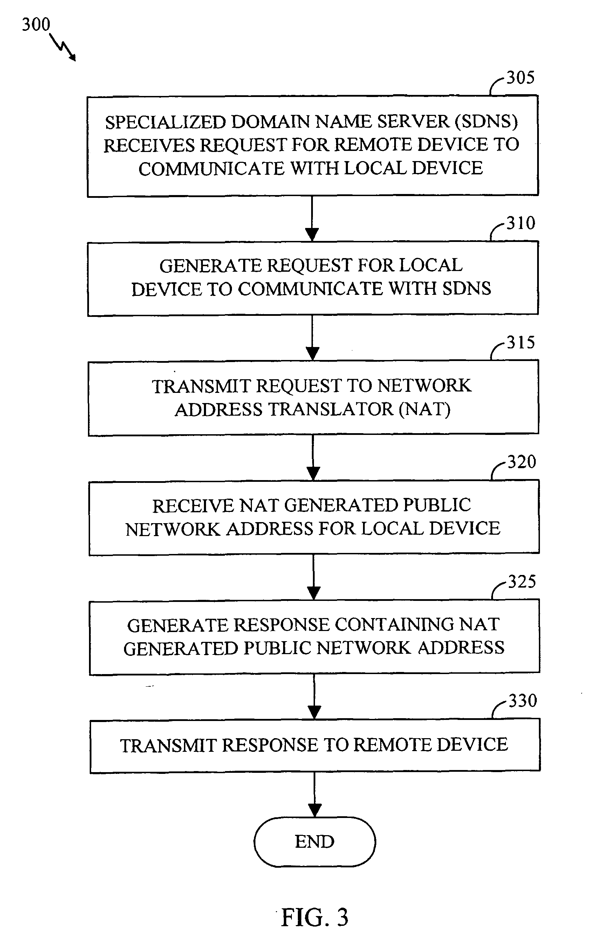

FIG. 3 is a flowchart of a method 300 (steps 305-330) showing a process for generating a publicly accessible IP address for local devices 125 in accordance with an embodiment of the present invention.

To begin, in step 305, SDNS 115 receives a request for one of the remote devices 105 to communicate with one of the local devices 125. The request to communicate is received over the public network interface card 117. As discussed above, the request to communicate identifies the local device 125 by its domain name. In accordance with standard domain name service protocol, several name servers might be searched until a name server recognizing the domain name specified in the request to communicate is found. A name server recognizes a domain name when a corresponding entry for the domain name is found in the name server's lookup table. In this example, SDNS 115 would process the request to communicate because it recognizes the domain name of the local device 125.

Next, in step 310, SDNS 115 generates a subsequent request for the local device 125 to communicate with SDNS 115. To generate the subsequent request, SDNS 115 searches a memory or storage element, such one having a lookup table, for the domain name of the local device 125 specified in the communications request and retrieves the local device's corresponding IP address within the private network 130. The local device's IP address within the private network 130 is used as the originating IP address in the generated subsequent request to communicate. The destination IP address is the IP address of SDNS 115. In this way, it appears that the local device is initiating a request to communicate externally.

Next, in step 315, the generated subsequent request for the local device to communicate with SDNS 115 is transmitted to NAT 120 over the private network 130 using the private network interface card 118. Because the request appears to have been originated by one of the local devices 125, upon receiving the generated subsequent request, NAT 120 will map one of the 2³² publicly accessible IP addresses to the IP address for the local device 125 specified in the generated subsequent request. NAT 120 will then forward a packet to the destination address designated in the request (that is, SDNS 115). The packet will show the origination address to be one of the 2³² publicly accessible IP addresses assigned to the local device by NAT 120 and the destination address as that of SDNS 115.

In step 320, SDNS 115 receives the packet from NAT 120. This packet is received over the public network 130 using the public network interface card 117.

In step 325, SDNS 115 generates a response to the request received in step 305 (that is, for the remote device to communicate with a local device). The response indicates the origination address as the publicly accessible IP address provided in the packet received in step 320 and the destination address as the IP address of the remote device 105.

Finally, in step 330 the generated response is transmitted to the remote device 105 that initiated the request to communicate. In this way, a remote device 105 is able to initiate communications with a local device 125 using its own IP address as the origination address and a publicly accessible IP address mapped to the local device 105 for the destination.

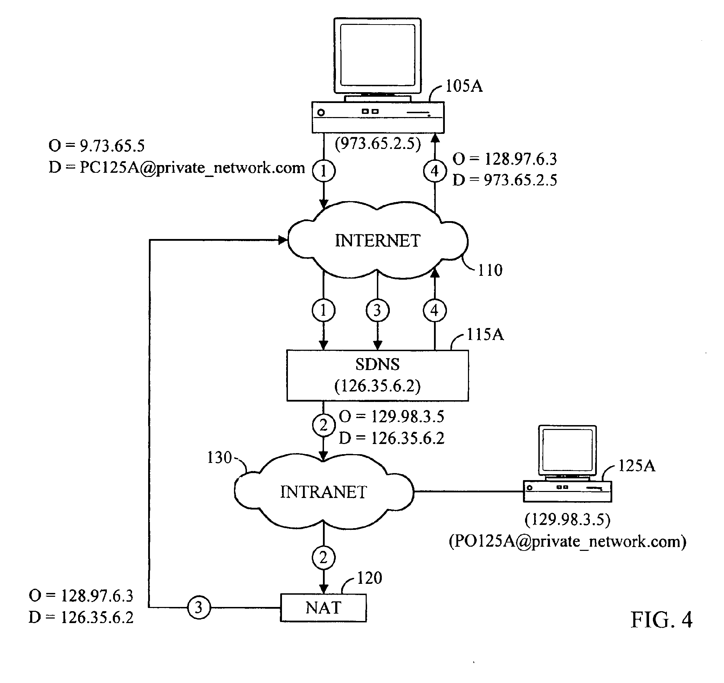

FIG. 4 shows an example implementation of method 300. Event 1 depicts remote computer 105A issuing a request to communicate with local computer 125A. In this example, the IP address for the remote computer 105A (that is, origination address) is 973.65.2.5 and the destination address of the local computer 125A is "PC125A@private_network.com". This request is communicated over the Internet.

In Event 2 (see steps 305-315, FIG. 3), SDNS 115 receives the request. In response, SDNS 115 searches a memory or lookup table and determines that the corresponding private network IP address for PC125A@private_network.com is 129.98.3.5. Accordingly, a subsequent request for the local computer 125A to communicate with SDNS 115 is generated. In this example, the subsequent request will show an origination address of 129.98.3.5 (the private network IP address of 125A) and a destination address of 126.35.6.2 (the IP address of SDNS 115). This request is then transmitted to NAT 120 over the private network 130 using the private network interface card 118.

In Event 3, NAT 120 has received the subsequent request to communicate and in response assigned 128.97.6.3 to the local computer 125A. This IP address is one of the 2³² publicly accessible IP addresses. Accordingly, a packet having 128.97.6.3 as an origination address and 126.35.6.2 as a destination address (IP address of SDNS 115) is sent out over the public network 110.

Finally, in Event 4, (see steps 320-330, FIG. 3) SDNS 115 has received the packet transmitted in Event 3. This packet is received by SDNS 115 through public network interface card 117. In response to receiving the packet, SDNS 115 prepares a response to the communications request represented by Event 1. This response is then transmitted to the remote computer 105A. In this example, the response indicates 128.97.6.3 as the origination address (the IP address of the local computer 125A assigned by NAT 120) and 973.65.2.5 as the destination address (the IP address of the remote computer 105A that initiated the request to communicate with local computer PC125A@private_network.com). The remote computer 105A can now communicate with the local computer 125A using the publicly accessible IP address received from SDNS 115. In this way, the remote computer 105A is able to initiate communications with the local computer 125A. Using the same process steps computer 105A could initiate communications with local wireless device 125B or local printer 125C, or remote FAX machine 105C could communicate with local computer 125A, or the two wireless devices 105B, 125B could communicate with each other, and so forth.

While various embodiments of the present invention have been described above, it should be understood that they have been presented by way of example only, and not limitation. Thus, the breadth and scope of the present invention should not be limited by any of the above-described exemplary embodiments, but should be define only in accordance with the following claims and their equivalents.

## Claims

1. A method for providing a public network address for a local device (125) on a private network (130) to a remote device (105) using a specialized domain name server (115), comprising the steps of:
receiving at the specialized domain name server (115), a request for the local device (125) to communicate with the remote device (105), wherein said request identifies the local device (125) using a domain name;
retrieving at the specialized domain name server the local device's corresponding IP address within the private network (130);
generating a subsequent request for the local device (125) to communicate with the specialized domain name server (115), wherein the local device's IP address is used;
transmitting said subsequent request from the specialized domain name server (115) to a network address translator (120);
receiving a public network address for the local device (125) generated by said network address translator (120) in response to receiving said subsequent request;
generating at the specialized domain name server a response to said request for the local device (125) to communicate with the remote device (105), the generated response including said public network address for the local device (125); and
transmitting by the specialized domain name server said generated response to the remote device (105).

2. A method for contacting a local device (125) on a private network (130) over a public network (110) using a network address translator (120), comprising the steps of a method according to claim 1, further comprising the steps of:
initiating from a remote device (105) a request to communicate with a local device (125) on a private network (130), wherein said request to communicate uses a domain name assigned to said local device (125);
receiving said subsequent request at the network address translator (120) and in response, generating a public network address for contacting the local device (125);
transmitting said public network address for contacting the local device (125) to said specialized domain name server (115); and
contacting the local device (125) from the remote device (105) using said public network address.

3. A specialized domain name server (115) for providing a public network address for a local device (125) on a private network (130) to a remote device (105), comprising:
means for receiving over a public network (110), a request for the remote device (105) to communicate with the local device (125), wherein said request uses a domain name assigned to the local device (125);
means for retrieving the local device's corresponding IP address within the private network (130);
means for generating a subsequent request for the local device (125) to communicate with the specialized domain name server (115) using the local device's IP address, in response to receiving said request for the remote device (105) to communicate with the local device (125);
means for transmitting said subsequent request from the specialized domain name server (115) to a network address translator (120);
means for receiving a public network address for the local device (125) generated by said network address translator (120) in response to receiving said subsequent request for the local device (125) to communicate with the specialized domain name server (115);
means for generating a response to said request for the remote device (105) to communicate with the local device (125), the response including said public network address for the local device (125); and
means for transmitting said generated response to the remote device (105).

4. The specialized domain name server (115) of claim 3, wherein said means for receiving a request for the remote device (105) to communicate with the local device (125), said means for receiving a public network address for the local device (125), and said means for transmitting said generated response to the remote device (105) is a first communications interface (230).

5. The specialized domain name server (115) of claim 3, wherein said means for transmitting said subsequent request from the specialized domain name server (115) to a network address translator (120) comprises a second communications interface (240).

6. A system for communication with a local device (125) on a private network (130) from a remote device (105), over a public network (110), comprising a specialized domain name server (115) according to any of claims 3 to 5 and further comprising:
a remote device (105) from which a request to communicate with a local device (125) on a private network (130) is initiated, wherein said request to communicate uses a domain name assigned to said local device (125); and
a network address translator (120) that receives said request for said local device (125) to communicate with said specialized domain name server (115) and communicates a response to said specialized domain name server (115), said response identifying a public network address assigned for communicating with said local device (125).

7. The system of claim 6, wherein said specialized domain name server (115) communicates said public network address to said remote device (105).

8. The system of claim 7, wherein said remote device (105) communicates with said local device (125) using said public network address.

9. The system of claim 6, wherein said specialized domain name server (115) is provided with a first communications interface (230) that communicates with the public network (110) and a second communication interface (240) that communicates with the private network (130).

10. The system of claim 9, wherein said first communications interface (230) receives said initiated request to communication with the local device (125).

11. The system of claim 9, wherein said specialized domain name server (115) communicates said subsequent request to said network address translator (120) using said second communications interface (240).

12. The system of claim 9, wherein said network address translator (120) communicates said response to said specialized domain name server (115) using said first communications interface (230).

13. The system of claim 9, wherein said specialized domain name server (115) communicates said public network address to said remote device (105) using said first communications interface (230).

14. The system of claim 9, wherein said remote device (105) uses said public network address to communicate with said local device (125).

## Patentansprüche

1. Ein Verfahren zum Bereitstellen einer öffentlichen Netzwerkadresse für eine lokale Vorrichtung (125) in einem privaten Netzwerk (130) zu einer entfernten Vorrichtung (105) unter Verwendung eines spezialisierten Domainnamen-Servers (115), aufweisend die folgenden Schritte:
Empfangen an dem spezialisierten Domainnamen-Server (115) eine Anfrage für die lokale Vorrichtung (125) mit der entfernten Vorrichtung (105) zu kommunizieren, wobei die Anfrage die lokale Vorrichtung (125) unter Verwendung eines Domainnamens identifiziert;
Abrufen an dem spezialisierten Domainnamen-Server (115) die der lokalen Vorrichtung entsprechende IP-Adresse in dem privaten Netzwerk (130);
Generieren einer anschließenden Anfrage für die lokale Vorrichtung (125) mit dem spezialisierten Domainnamen-Server (115) zu kommunizieren, wobei die IP-Adresse von der lokalen Vorrichtung verwendet wird;
Übertragen der anschließenden Anfrage von dem spezialisierten Domainnamen-Server (115) zu einem Netzwerkadressen-Übersetzer (120);
Empfangen einer öffentlichen Netzwerkadresse für die lokale Vorrichtung (125) generiert durch den Netzwerkadressen-Übersetzer (120) als Antwort auf das Empfangen der anschließenden Anfrage;
Generieren an dem spezialisierten Domainnamen-Server (115) eine Antwort zu der Anfrage für die lokale Vorrichtung (125) mit der entfernten Vorrichtung (105) zu kommunizieren, die generierte Antwort beinhaltet die öffentliche Netzwerkadresse für die lokale Vorrichtung (125); und
Übertragen durch den spezialisierten Domainnamen-Server (115) die generierte Antwort zu der entfernten Vorrichtung (105).

2. Ein Verfahren zum Kontaktieren einer lokalen Vorrichtung (125) in einem privaten Netzwerk (130) über ein öffentliches Netzwerk (110) unter Verwendung eines Netzwerkadressen-Übersetzers (120), aufweisend die Schritte von einem Verfahren gemäß Anspruch 1, weiter aufweisend die folgenden Schritte:
Initiieren von einer entfernten Vorrichtung (105) eine Anfrage mit einer lokalen Vorrichtung (125) in einem privaten Netzwerk (130) zu kommunizieren, wobei die Anfrage zum Kommunizieren einen Domainnamen verwenden, zugewiesen zu der lokalen Vorrichtung (125);
Empfangen der anschließenden Anfrage an dem Netzwerkadressen-Übersetzer (120) und als Antwort Generieren einer öffentlichen Netzwerkadresse zum Kontaktieren der lokalen Vorrichtung (125);
Übertragen der öffentlichen Netzwerkadresse zum Kontaktieren der lokalen Vorrichtung (125) an den spezialisierten Domainnamen-Server (115); und
Kontaktieren der lokalen Vorrichtung (125) von der entfernten Vorrichtung (105) unter Verwendung der öffentlichen Netzwerkadresse.

3. Ein spezialisierter Domainnamen-Server (115) zum Bereitstellen einer öffentlichen Netzwerkadresse für eine lokale Vorrichtung (125) in einem privaten Netzwerk (130) zu einer entfernten Vorrichtung (105), aufweisend:
Mittel zum Empfangen über ein öffentliches Netzwerk (110) eine Anfrage für die entfernte Vorrichtung (105) mit der lokalen Vorrichtung (125) zu kommunizieren, wobei die Anfrage einen Domainnamen verwendet, zugewiesen zu der lokalen Vorrichtung (125);
Mittel zum Abrufen der der lokalen Vorrichtung entsprechenden IP-Adresse in dem privaten Netzwerk (130);
Mittel zum Generieren einer anschließenden Anfrage für die lokale Vorrichtung (125) mit dem spezialisierten Domainnamen-Server (115) zu kommunizieren unter Verwendung der IP-Adresse der lokalen Vorrichtung, als Antwort auf das Empfangen der Anfrage für die entfernte Vorrichtung (105) mit der lokalen Vorrichtung (125) zu kommunizieren;
Mittel zum Übertragen der anschließenden Anfrage von dem spezialisierten Domainnamen-Server (115) zu einem Netzwerkadressen-Übersetzer (120);
Mittel zum Empfangen einer öffentlichen Netzwerkadresse für die lokale Vorrichtung (125), generiert durch den Netzwerkadressen-Übersetzer (120) als Antwort auf das Empfangen der anschließenden Anfrage für die lokale Vorrichtung (125) mit dem spezialisierten Domainnamen-Server (115) zu kommunizieren;
Mittel zum Generieren einer Antwort auf die Anfrage für die entfernte Vorrichtung (105) mit der lokalen Vorrichtung (125) zu kommunizieren, die Antwort beinhaltet die öffentliche Netzwerkadresse für die lokale Vorrichtung (125); und
Mittel zum Übertragen der generierten Antwort zu der entfernten Vorrichtung (105).

4. Der spezialisierte Domainnamen-Server (115) von Anspruch 3, wobei die Mittel zum Empfangen einer Anfrage für die entfernte Vorrichtung (105) mit der lokalen Vorrichtung (125) zu kommunizieren, die Mittel zum Empfangen einer öffentlichen Netzwerkadresse für die lokale Vorrichtung (125) und die Mittel zum Übertragen der generierten Antwort zu der entfernten Vorrichtung (105) ein erstes Kommunikations-Interface (230) ist.

5. Der spezialisierte Domainnamen-Server (115) von Anspruch 3, wobei die Mittel zum Übertragen der anschließenden Anfrage von dem spezialisierten Domainnamen-Server (115) zu einem Netzwerkadressen-Übersetzer (120) aufweist ein zweites Kommunikations-Interface (240).

6. Ein System zum Kommunizieren mit einer lokalen Vorrichtung (125) in einem privaten Netzwerk (130) von einer entfernten Vorrichtung (105) über ein öffentliches Netzwerk (110) aufweisend einen spezialisierten Domainnamen-Server (115) gemäß jeglichem von den Ansprüchen 3 bis 5 und weiter aufweisend:
eine entfernte Vorrichtung (105) von welcher eine Anfrage mit einer lokalen Vorrichtung (125) auf einem privaten Netzwerk (130) zu kommunizieren initiiert wird, wobei die Anfrage zum Kommunizieren einen Domainnamen verwendet, zugeordnet zu der lokalen Vorrichtung (125); und
ein Netzwerkadressen-Übersetzer (120), der die Anfrage für die lokale Vorrichtung (125) mit dem spezialisierten Domainnamen-Server (115) zu kommunizieren empfängt und eine Antwort zu dem spezialisierten Domainnamen-Server (115) kommuniziert, die Antwort identifiziert eine öffentliche Netzwerkadresse zugewiesen zum Kommunizieren mit der lokalen Vorrichtung (125).

7. Das System von Anspruch 6, wobei der spezialisierte Domainnamen-Server (115) die öffentliche Netzwerkadresse zu der entfernten Vorrichtung (105) kommuniziert.

8. Das System von Anspruch 7, wobei die entfernte Vorrichtung (105) mit der lokalen Vorrichtung (125) kommuniziert unter Verwendung der öffentlichen Netzwerkadresse.

9. Das System von Anspruch 6, wobei der spezialisierte Domainnamen-Server (115) bereitgestellt ist mit einem ersten Kommunikations-Interface (230), das mit dem öffentlichen Netzwerk (110) kommuniziert und einem zweiten Kommunikations-Interface (240), das mit dem privaten Netzwerk (130) kommuniziert.

10. Das System von Anspruch 9, wobei das erste Kommunikations-Interface (230) die initiierte Anfrage mit der lokalen Vorrichtung (125) zu kommunizieren empfängt.

11. Das System von Anspruch 9, wobei der spezialisierte Domainnamen-Server (115) die anschließende Anfrage zu dem Netzwerkadressen-Übersetzer (120) kommuniziert unter Verwendung des zweiten Kommunikations-Interfaces (240).

12. Das System von Anspruch 9, wobei der Netzwerkadressen-Übersetzer (120) die Antwort zu dem spezialisierten Domainnamen-Server (115) unter Verwendung des ersten Kommunikations-Interfaces (230) kommuniziert.

13. Das System von Anspruch 9, wobei der spezialisierte Domainnamen-Server (115) die öffentliche Netzwerkadresse zu der entfernten Vorrichtung (105) unter Verwendung des ersten Kommunikations-Interface (230) kommuniziert.

14. Das System von Anspruch 9, wobei die entfernte Vorrichtung (105) die öffentliche Netzwerkadresse verwendet, um mit der lokalen Vorrichtung (125) zu kommunizieren.

## Revendications

1. Procédé destiné à mettre à disposition d'un dispositif distant (105) une adresse de réseau public d'un dispositif local (125) sur un réseau privé (130) au moyen d'un serveur de noms de domaine spécialisé (115), comprenant les étapes consistant à :
recevoir, au niveau du serveur de noms de domaine spécialisé (115), une demande pour que le dispositif local (125) communique avec le dispositif distant (105), dans lequel ladite demande identifie le dispositif local (125) au moyen d'un nom de domaine ;
récupérer, au niveau du serveur de noms de domaine spécialisé, l'adresse IP correspondante du dispositif local à l'intérieur du réseau privé (130) ;
générer une demande subséquente pour que le dispositif local (125) communique avec le serveur de noms de domaine spécialisé (115), dans lequel l'adresse IP du dispositif local est utilisée.
transmettre ladite demande subséquente du serveur de noms de domaine spécialisé (115) à un traducteur d'adresses réseau (120) ;
recevoir une adresse de réseau public pour le dispositif local (125) générée par ledit traducteur d'adresses réseau (120) en réponse à la réception de ladite demande subséquente ;
générer, au niveau du serveur de noms de domaine spécialisé, une réponse à ladite demande pour que le dispositif local (125) communique avec le dispositif distant (105), la réponse générée comprenant ladite adresse de réseau public pour le dispositif local (125) ; et
transmettre ladite réponse générée au dispositif distant (105), au moyen du serveur de noms de domaine spécialisé.

2. Procédé destiné à mettre en contact, par l'intermédiaire d'un réseau public (110), un dispositif local (125) sur un réseau privé (130) au moyen d'un traducteur d'adresses réseau (120), lequel procédé comprend les étapes d'un procédé selon la revendication 1, comprenant en outre les étapes consistant à :
initier, à partir d'un dispositif distant (105), une demande pour communiquer avec un dispositif local (125) sur un réseau privé (130), dans lequel ladite demande pour communiquer utilise un nom de domaine attribué audit dispositif local (125) ;
recevoir ladite demande subséquente au niveau du traducteur d'adresses réseau (120) et en réponse, générer une adresse de réseau public destinée à mettre en contact le dispositif local (125) ;
transmettre audit serveur de noms de domaine spécialisé (115) ladite adresse de réseau public destinée à mettre en contact le dispositif local (125) ; et
mettre en contact le dispositif local (125) à partir du dispositif distant (105) au moyen de ladite adresse de réseau public.

3. Serveur de noms de domaine spécialisé (115) destiné à mettre à disposition d'un dispositif distant (105) une adresse de réseau public d'un dispositif local (125) sur un réseau privé (130), comprenant :
un moyen destiné à recevoir, par l'intermédiaire d'un réseau public (110), une demande pour que le dispositif distant (105) communique avec le dispositif local (125), dans lequel ladite demande utilise un nom de domaine attribué au dispositif local (125) ;
un moyen destiné à récupérer l'adresse IP correspondante du dispositif local à l'intérieur du réseau privé (130) ;
un moyen destiné à générer une demande subséquente pour que le dispositif local (125) communique avec le serveur de noms de domaine spécialisé (115) au moyen de l'adresse IP du dispositif local, en réponse à la réception de ladite demande pour que le dispositif distant (105) communique avec le dispositif local (125) ;
un moyen destiné à transmettre ladite demande subséquente du serveur de noms de domaine spécialisé (115) à un traducteur d'adresses réseau (120) ;
un moyen destiné à recevoir une adresse de réseau public pour le dispositif local (125) générée par ledit traducteur d'adresses réseau (120) en réponse à la réception de ladite demande subséquente pour que le dispositif local (125) communique avec le serveur de noms de domaine spécialisé (115) ;
un moyen destiné à générer une réponse à ladite demande pour que le dispositif distant (105) communique avec le dispositif local (125), la réponse comprenant ladite adresse de réseau public pour le dispositif local (125) ; et
un moyen destiné à transmettre ladite réponse générée au dispositif distant (105).

4. Serveur de noms de domaine spécialisé (115) selon la revendication 3, dans lequel ledit moyen destiné à recevoir une demande pour que le dispositif distant (105) communique avec le dispositif local (125), ledit moyen destiné à recevoir une adresse de réseau public pour le dispositif local (125), et ledit moyen destiné à transmettre ladite réponse générée au dispositif distant (105) constituent une première interface de communication (230).

5. Serveur de noms de domaine spécialisé (115) selon la revendication 3, dans lequel ledit moyen destiné à transmettre ladite demande subséquente du serveur de noms de domaine spécialisé (115) à un traducteur d'adresses réseau (120) comprend une seconde interface de communication (240).

6. Système de communication avec un dispositif local (125) sur un réseau privé (130) depuis un dispositif distant (105), par l'intermédiaire d'un réseau public (110), comprenant un serveur de noms de domaine spécialisé (115) selon l'une quelconque des revendications 3 à 5 et comprenant en outre :
un dispositif distant (105) à partir duquel une demande pour communiquer avec un dispositif local (125) sur un réseau privé (130) est initiée, dans lequel ladite demande pour communiquer utilise un nom de domaine attribué audit dispositif local (125) ; et
un traducteur d'adresses réseau (120) qui reçoit ladite demande pour que ledit dispositif local (125) communique avec ledit serveur de noms de domaine spécialisé (115) et communique une réponse audit serveur de noms de domaine spécialisé (115), ladite réponse identifiant une adresse de réseau public attribuée pour communiquer avec ledit dispositif local (125).

7. Système selon la revendication 6, dans lequel ledit serveur de noms de domaine spécialisé (115) communique ladite adresse de réseau public audit dispositif distant (105).

8. Système selon la revendication 7, dans lequel ledit dispositif distant (105) communique avec ledit dispositif local (125) au moyen de ladite adresse de réseau public.

9. Système selon la revendication 6, dans lequel ledit serveur de noms de domaine spécialisé (115) est mis à disposition avec une première interface de communication (230) qui communique avec le réseau public (110) et une seconde interface de communication (240) qui communique avec le réseau privé (130).

10. Système selon la revendication 9, dans lequel ladite première interface de communication (230) reçoit ladite demande initiée pour une communication avec le dispositif local (125).

11. Système selon la revendication 9, dans lequel ledit serveur de noms de domaine spécialisé (115) communique ladite demande subséquente audit traducteur d'adresses réseau (120) au moyen de ladite seconde interface de communication (240).

12. Système selon la revendication 9, dans lequel ledit traducteur d'adresses réseau (120) communique ladite réponse audit serveur de noms de domaine spécialisé (115) au moyen de ladite première interface de communication (230).

13. Système selon la revendication 9, dans lequel ledit serveur de noms de domaine spécialisé (115) communique ladite adresse de réseau public audit dispositif distant (105) au moyen de ladite première interface de communication (230).

14. Système selon la revendication 9, dans lequel ledit dispositif distant (105) utilise ladite adresse de réseau public pour communiquer avec ledit dispositif local (125).
